# EUROPEAN PATENT APPLICATION

(11) **EP 4 622 320 A1**
(43) Date of publication of application: **24.09.2025**
(21) Application number: 23905827.4
(22) Date of filing: 15.12.2023
(51) Int. Cl.: H04W 24/02

(54) **MEASUREMENT METHOD AND APPARATUS, TERMINAL, AND NETWORK DEVICE**

(30) Priority: 19.12.2022 CN 202211631123
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100032 (CN)
(74) Representative: Murgitroyd & Company
(86) International application number: PCT/CN2023/139103
(87) International publication number: WO 2024/131663

(57) **Abstract**

This disclosure provides a measurement method, a measurement apparatus, a UE and a network device, and relates to the field of communication technology. The method is applied to a UE, and includes at least one of the following: receiving first information sent by a network, wherein the first information is related to a measurement and/or a measurement gap; obtaining a first rule, wherein the first rule is related to the measurement and/or a measurement collision; or receiving second information sent by the network, wherein the second information is related to the measurement and/or a priority of the measurement.

## Description

### CROSS-REFERENCE TO RELATED APPLICATION

This application claims priority to Chinese Patent Application No. 202211631123.6 filed in China on December 19, 2022, disclosure of which is incorporated herein by reference in its entirety.

### TECHNICAL FIELD

The present disclosure relates to the technical field of communications, and in particular to a measurement method and apparatus, user equipment (UE) and network device.

### BACKGROUND

Rel-17 introduces a variety of measurement gaps, e.g., concurrent measurement gap, preconfigured measurement gap, network-controlled small measurement gap, multi-universal subscriber identity module (MUSIM) measurement gap, positioning measurement gap, non-terrestrial network (NTN) measurement gap, etc. The different types of measurement gaps are different from each other in terms of configuration method, activation/deactivation method, and specific measurement gap pattern and the like. Due to tight schedule and high complexity, R17 only considers simple scenarios where various measurement gaps are used separately, and does not consider scenarios where a variety of measurement gaps are used jointly. Therefore, it does not solve the problem of measurement collision caused by the coexistence of a variety of measurement gaps.

### SUMMARY

Embodiments of the present disclosure provide a measurement method, a measurement apparatus, a UE, and a network device, to solve the problem of measurement collision that exists in a scenario where a variety of measurement gaps are used jointly.

In a first aspect, in order to achieve the above-mentioned object, an embodiment of the present disclosure provides a measurement method. The method is applied to a UE, and includes at least one of the following:
receiving first information sent by a network, wherein the first information is related to a measurement and/or a measurement gap;
obtaining a first rule, wherein the first rule is related to the measurement and/or a measurement collision;
receiving second information sent by the network, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to the priority and/or resolution of the measurement collision.

Optionally, the method further includes at least one of the following:
keeping the first measurement gap;
dropping a measurement gap having a measurement collision with the first measurement gap.

Optionally, the first information includes first indication information, and the first indication information indicates a measurement gap to be dropped or kept.

Optionally, the first rule is predefined by a protocol, or is indicated by a network, or depends on UE implementation.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among multi-universal subscriber identity module (MUSIM) gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Optionally, the method further includes:
receiving second indication information, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Optionally, the method further includes:
receiving third indication information sent by the network, wherein the third indication information is used for indicating a default priority of the measurement gap.

Optionally, the second information includes a first priority, wherein the first priority is used for N measurement gaps, where N is a non-zero integer.

Optionally, the method further includes:
resolving the measurement collision based on the first priority, and then resolving the measurement collision between the N measurement gaps.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

In a second aspect, in order to achieve the above-mentioned object, an embodiment of the present disclosure provides a measurement method. The method is applied to a network and includes at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to the priority and/or resolution of the measurement collision.

Optionally, the first information includes first indication information, and the first indication information indicates a measurement gap to be dropped or kept.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among multiple MUSIM gaps, keeping all colliding MUSIM gaps;
for collision among multiple MUSIM gaps, keeping MUSIM gaps used for a same frequency layer;
for collision among multiple measurement gaps, an aperiodic measurement gap is kept;
for collision among multiple measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Optionally, the method further includes:
sending second indication information to the UE, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Optionally, the method further includes:
sending third indication information to the UE, wherein the third indication information is used for indicating a default priority of the measurement gap.

Optionally, the second information includes a first priority, wherein the first priority is used for N measurement gaps, where N is a non-zero integer.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

In a third aspect, in order to achieve the above-mentioned object, an embodiment of the present disclosure provides a measurement apparatus. The measurement apparatus is applied to a UE, and includes an obtaining module, and the obtaining module is configured to perform at least one of the following:
receiving first information sent by a network, wherein the first information is related to a measurement and/or a measurement gap;
obtaining a first rule, wherein the first rule is related to the measurement and/or a measurement collision;
receiving second information sent by the network, wherein the second information is related to the measurement and/or a priority of the measurement.

In a fourth aspect, in order to achieve the above-mentioned object, an embodiment of the present disclosure provides a measurement apparatus. The measurement apparatus is applied to a network, and includes a first sending module, and the first sending module is configured to perform at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

In a fifth aspect, in order to achieve the above-mentioned object, an embodiment of the present disclosure provides a UE including a processor and a transceiver; the transceiver receives and sends data under the control of the processor;
the transceiver is used for receiving first information sent by a network, wherein the first information is related to a measurement and/or a measurement gap;
the processor is used for obtaining a first rule, wherein the first rule is related to the measurement and/or a measurement collision;
the transceiver is further used for receiving second information sent by the network, wherein the second information is related to the measurement and/or a priority of the measurement.

In a sixth aspect, in order to achieve the above-mentioned object, an embodiment of the present disclosure provides a network device including a processor and a transceiver; the transceiver receives and sends data under the control of the processor, and the transceiver is used for performing at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

**In** a seventh aspect, in order to achieve the above-mentioned object, an embodiment of the present disclosure provides a UE, including a transceiver, a processor, a memory, and a program stored in the memory and executable by the processor; the processor, when executing the program, implements the measurement method as described in the first aspect.

**In** an eighth aspect, in order to achieve the above-mentioned object, an embodiment of the present disclosure provides a network device, including a transceiver, a processor, a memory, and a program stored in the memory and executable by the processor; the processor, when executing the program, implements the measurement method as described in the second aspect.

**In** a ninth aspect, in order to achieve the above-mentioned object, an embodiment of the present disclosure provides a computer-readable storage medium on which a computer program is stored, wherein the program, when executed by a processor, implements the measurement method as described in the first aspect, or the measurement method as described in the second aspect.

Beneficial effects of the above technical solution of the present disclosure are as follows.

**In** the measurement method according to the embodiment of the present disclosure, the UE receives the first information related to a measurement and/or a measurement gap sent by the network, thereby processing, based on the first information, the measurement gaps in which the time domain collision occurs; and/or the UE obtains a first rule related to the measurement and/or a measurement collision, thereby processing, based on the first rule, the measurement gaps in which the time domain collision occurs; and/or the UE receives second information related to the measurement and/or a priority of the measurement sent by the network, thereby processing, based on the first rule, the measurement gaps in which the time domain collision occurs; in this way, when the time domain collision occurs, the measurement gaps in which the time domain collision occurs is processed based on the information sent by the network (the first information and/or the second information) and/or the first rule obtained by the UE, thereby providing a solution to the measurement collision caused by the coexistence of a variety of measurement gaps in the scenario where the variety of measurement gaps are used jointly.

### BRIEF DESCRIPTION OF THE DRAWINGS

Fig. 1 is a schematic diagram of a collision between conventional measurement gaps of different priorities;
Fig. 2 is a flow chart of a measurement method according to an embodiment of the present disclosure;
Fig. 3 is a schematic diagram showing the keeping of a first measurement gap when there is a collision between measurement gaps of the same priority according to an embodiment of the present disclosure;
Fig. 4 is another schematic diagram of a collision between measurement gaps of different priorities according to an embodiment of the present disclosure;
Fig. 5 is a schematic diagram showing the processing of colliding measurement gaps based on dynamically configured priorities according to an embodiment of the present disclosure;
Fig. 6 is another flow chart of a measurement method according to an embodiment of the present disclosure;
Fig. 7 is a schematic structural diagram of a measurement apparatus according to an embodiment of the present disclosure;
Fig. 8 is another schematic structural diagram of a measurement apparatus according to an embodiment of the present disclosure;
Fig. 9 is a schematic structural diagram of a UE according to an embodiment of the present disclosure;
Fig. 10 is a schematic structural diagram of a network device according to an embodiment of the present disclosure;
Fig. 11 is another schematic structural diagram of a UE according to an embodiment of the present disclosure;
Fig. 12 is another schematic structural diagram of a network device according to an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

It is understood, expression "one embodiment" or "an embodiment" used throughout the specification means that specific features, structures, or characteristics associated with the embodiment are included in at least one embodiment of the present disclosure. Therefore, the references to "in one embodiment" or "in an embodiment" throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the order of execution of each process should be determined by its function and internal logic, and the sequence numbers of the following processes should not constitute any limitation on the implementation process of the embodiments of the present disclosure.

Additionally, the terms "system" and "network" are often used interchangeably herein.

In the embodiments provided in the present disclosure, it should be understood that expression "B corresponding to A" means that B is associated with A, and B can be determined based on A. However, it should also be understood that determining B based on A does not mean B is determined based only on A, but instead B can also be determined based on A and/or other information.

Before describing the embodiments of the present disclosure, the relevant technical points are described first.
1. Regarding concurrent measurement gaps, the network will indicate the priority of each measurement gap through radio resource control (RRC), and the priorities of the two concurrent measurement gaps cannot be the same. When the measurement gaps overlap in time domain, the UE drops the measurement gap corresponding to the low priority. There are two situations in which there is a collision between the measurement gaps: there is indeed an overlap in the time domain; there is no overlap in the time domain but a distance between the two measurement gaps is less than a certain value such that the UE cannot handle it.
2. The measurement collision problem caused by the coexistence of a variety of measurement gaps are as follows.

Since a variety of measurement gaps coexist, it is very likely that multiple measurement gaps coexist (taking MUSIM as an example, up to 4 MUSIM gaps can be configured. If other types of measurement gaps are considered, the number of measurement gaps will be greater). It is very likely that there are measurement gaps with the same priority. If there is a time domain collision between measurement gaps with the same priority, how the UE makes a selection is a problem that needs to be solved.

Even if the priorities of the measurement gaps having a collision in time domain are different, when the number of measurement gaps exceeds 2, there will still be ambiguity in selecting the measurement gap, i.e. which gap is kept, which gap is dropped.

In addition, in the related art, among measurement gaps having a time domain collision, the measurement gap with low priority is always dropped by the UE, resulting in the UE being unable to perform certain measurements. Taking NTN as an example, due to the large difference in transmission delay between different satellite cells, the UE may need multiple measurement gaps with different offsets to complete the measurement of all cells at a certain frequency layer. However, if some measurement gaps are dropped by the UE due to time domain collisions, the UE cannot measure the cells in which the reference symbols fall in the measurement gap, thereby affecting mobility. Therefore, a more dynamic or flexible solution to the measurement collision problem is required.

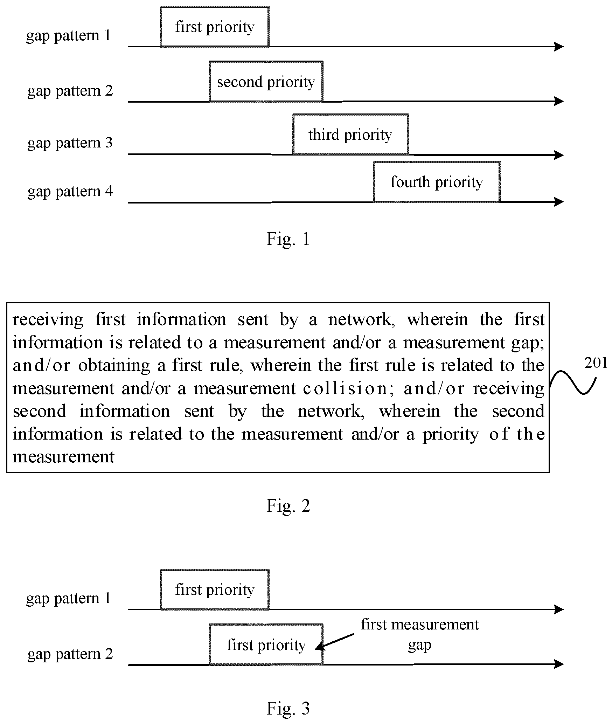

Based on the above problems, as shown in Fig. 2, an embodiment of the present disclosure provides a measurement method, which is applied to a UE. The method includes a step 201, which includes at least one of the following:
(1) receiving first information sent by a network, wherein the first information is related to a measurement and/or a measurement gap;
(2) obtaining a first rule, wherein the first rule is related to the measurement and/or a measurement collision;
   here, it should be noted that obtaining the first rule in this step includes: receiving information sent by the network (the information includes the first rule), and/or, protocol pre-definition (that is, pre-specified in a technical specification, and the UE obtains the rules or methods specified in the technical specification), or the first rule can be determined autonomously by the UE, etc.;
(3) receiving second information sent by the network, wherein the second information is related to the measurement and/or a priority of the measurement.

Here, it should be noted that: first, the network in the embodiments of the present disclosure can also be referred to as a network side device, a network side node, a network, a network device or a network node, etc.; second, the measurement in the embodiments of the present disclosure includes: primary synchronization signal (PSS)/secondary synchronization signal (SSS) detection, synchronization signal block (SSB)-based measurement, channel state information reference signal (CSI-RS)-based measurement, SSB index obtaining, etc.; third, the measurement collision in the embodiments of the present disclosure includes any of the following situations: there is a time domain overlap between two measurement gaps, or the distance between the two measurement gaps is less than a threshold; fourth, the operation performed within the measurement gap includes: measuring reference signal received power (RSRP), measuring reference signal received quality (RSRQ), measuring signal to noise and interference ratio (SINR), receiving system messages (including master information block (MIB), system information block (SIB) 1. on demand system message), obtaining paging.

In the embodiment of the present disclosure, the UE receives the first information related to a measurement and/or a measurement gap sent by the network, thereby processing, based on the first information, the measurement gaps in which the time domain collision occurs; and/or the UE obtains a first rule related to the measurement and/or a measurement collision, thereby processing, based on the first rule, the measurement gaps in which the time domain collision occurs; and/or the UE receives second information related to the measurement and/or a priority of the measurement sent by the network, thereby processing, based on the first rule, the measurement gaps in which the time domain collision occurs; in this way, when the time domain collision occurs, the measurement gaps in which the time domain collision occurs is processed based on the information sent by the network (the first information and/or the second information) and/or the first rule obtained by the UE, thereby providing a solution to the measurement collision caused by the coexistence of a variety of measurement gaps in the scenario where the variety of measurement gaps are used jointly.

As an optional implementation, the first information includes first measurement gap related information, and the first measurement gap related information includes at least one of the following:
an identifier of a first measurement gap; wherein the identifier of the measurement gap may also be described as a gap pattern ID, that is, the identifier of the first measurement gap may also be expressed as a first gap pattern ID;
a priority of the first measurement gap;
a period of the first measurement gap; wherein the period of the measurement gap can also be described as: measurement gap repetition period (MGRP), visible interruption repetition period (VIRP);
a length of the first measurement gap; wherein the length of the measurement gap may also be described as: measurement gap length, measurement length, etc. ;
an offset value of the first measurement gap.

Here, it should be noted that the first measurement gap may also be described as a reference measurement gap; in the embodiment of the present disclosure, based on the first measurement gap related information, the UE may determine the first measurement gap.

As an optional implementation, the first measurement gap is related to a priority and/or the resolution of a measurement collision.

Here, it should be noted that, in this optional implementation, the first measurement gap being related to the priority means that the priority is obtained implicitly, that is, implicitly indicating that the first measurement gap has the highest priority, so as to retain the first measurement gap based on the priority and drop other colliding measurement gaps.

The measurement collision includes measurement gap collision, measurement gap collision includes at least one of the following:
at least two measurement gaps overlap in time domain; wherein the at least two measurement gaps may also be described as at least two sets of measurement gaps, or at least two measurement gap occasions, etc.;
a time domain distance between at least two measurement gaps is less than or equal to a first threshold;
there are at least two measurement purposes in the same measurement gap;
there are at least two frequency layers for the same measurement purpose in the same measurement gap, wherein the frequency layer can also be described as a measurement object, a frequency; the frequency layer can be indicated by an absolute radio frequency channel number (ARFCN);
a collision caused by SSB measurement timing configuration (SMTC), where the collision caused by SMTC include: collision between SMTCs of different services, and/or multiple SMTCs for the same frequency layer may fall in different measurement gaps (for example, in a NTN scenario).

Further, as an optional implementation, after the UE receives information related to a measurement and/or a measurement gap (e.g., at least one of the first information, the first rule, or the second information), the method further includes at least one of the following:
keeping the first measurement gap;
dropping the measurement gap having a measurement collision with the first measurement gap.

In other words, after receiving the information related to a measurement and/or a measurement gap, the UE can process, based on the information, the measurement gaps in which a collision occurs, wherein the processing can be: keeping the first measurement gap, or dropping the measurement gap having a measurement collision with the first measurement gap.

Specifically, in this optional implementation, a specific example of keeping the first measurement gap is shown in Fig. 3. As shown in Fig. 3, gap pattern 1 and gap pattern 2 are two measurement gaps with the same priority and overlapping in time domain, where gap pattern 1 is designated as the first measurement gap, gap pattern 1 is kept by the UE, and gap pattern 2 which has the same priority as the gap pattern 1 and overlaps the gap pattern 1 in time domain is dropped by the UE.

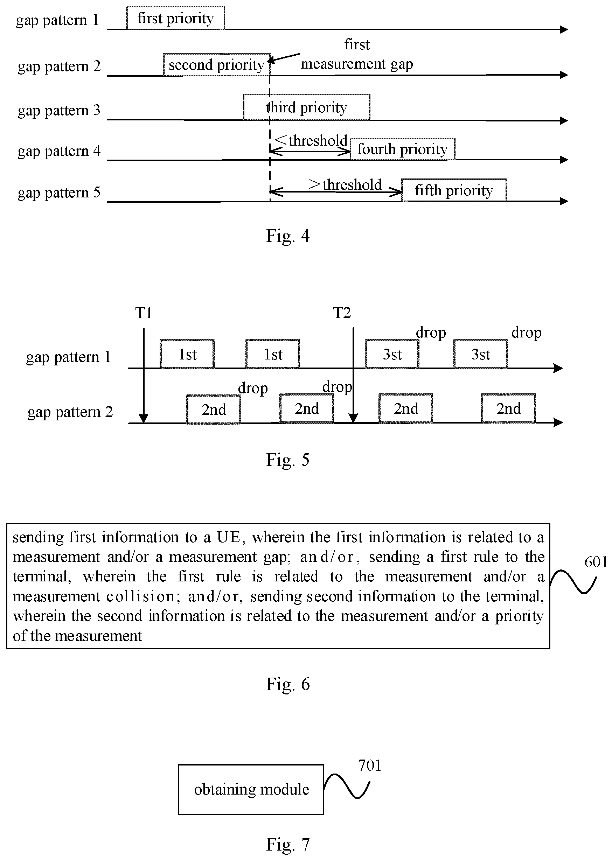

In this optional implementation, a specific example of dropping the measurement gap that has a measurement collision with the first measurement gap is shown in Fig. 4. As shown in Fig. 4, gap pattern 2 is designated as the first measurement gap, gap pattern 2 is kept by the UE, and gap patterns 1, 3 and 4 which have a time domain collision with the gap pattern 2 are dropped by the UE (gap pattern 1 and gap pattern 3 overlap with gap pattern 2 in time domain; although gap pattern 4 does not physically overlap with gap pattern 2, the distance between them is less than a threshold and the UE cannot handle it); gap pattern 5 which does not collision with gap pattern 2 in time domain is kept.

In the above multiple optional implementations of the embodiment of the present disclosure, the following problems can be solved by introducing the first measurement gap.

First, when the priorities of the measurement gaps colliding in time domain are the same, the related art cannot solve the collision problem; but the introduction of the first measurement gap can effectively solve the problem. Specifically, after the UE obtains the first measurement gap, the UE will retain the first measurement gap and drop other measurement gaps having a time domain collision with the first measurement gap.

Second, when the priorities of the measurement gaps colliding in time domain are different, if the number of measurement gaps exceeds two, there will also be ambiguity in the selection of measurement gaps. Specifically, as shown in Fig. 1, gap pattern 2 has a lower priority than gap pattern 1, if only the gap pattern 1 and gap pattern 2 are considered, then gap pattern 2 will be dropped by the UE. However, gap pattern 3 and gap pattern 2 also overlap in time domain, hence the foregoing operation regarding gap pattern 2 will affect the gap pattern 3. Specifically, if the UE has dropped the gap pattern 2, how does the UE handle the gap pattern 3 overlapping with the dropped measurement gap (gap pattern 2), i.e., to drop or retain the gap pattern 3, remains a problem. There is currently no solution to this problem. To address this problem, the first measurement gap is introduced in the embodiment of the present disclosure to assist the UE in resolving the ambiguity problem; specifically, when the UE obtains the first measurement gap, the UE will retain the first measurement gap and drop other measurement gaps that have a time domain collision with the first measurement gap (even if the priority of other measurement gap is higher than that of the first measurement gap, the measurement gap with the higher priority will also be dropped by the UE).

As an optional implementation, the first information includes first indication information, and the first indication information indicates a measurement gap to be dropped or kept; wherein the measurement gap may be a first measurement gap (reference measurement gap) or other measurement gap.

That is to say, when a measurement collision occurs or exists, if the first indication information indicates a measurement gap to be kept, the UE retains the measurement gap indicated by the first indication information (or in other words, the UE performs measurement based on the measurement gap indicated by the first indication information), and drops other measurement gaps in which the collision exists; if the first indication information indicates a measurement gap to be dropped, the UE drops the measurement gap indicated by the first indication information (or in other words, the UE does not perform measurement based on the measurement gap indicated by the first indication information) and uses other measurement gap.

For example, in a scenario in which only two measurement gaps overlap, the first measurement gap can also be understood as the aforementioned measurement gap to be kept. Of course, the first measurement gap can also be understood as the measurement gap to be dropped. In other words, from the perspective of protocol standard drafting or signaling designing, in the scenario in which only two measurement gaps overlap, the first measurement gap may not be referred to as a reference measurement gap, instead, the network explicitly indicates to the UE which measurement gap is to be dropped or kept at this time.

As an optional implementation, the first rule is predefined by a protocol, or is indicated by a network, or depends on UE implementation.

That is, the UE may determine the specific content of the first rule based on protocol predefinition, or the network may indicate to the UE which rule in the first rule is to be adopted, or the UE may select, from the first rule, a rule to adopt based on its own implementation.

As an optional implementation, the first rule includes at least one of the following items 1 to 9.
(1) For a time domain collision between a measurement gap with low priority and a measurement gap with high priority, the measurement gap with low priority is dropped; that is, when there is a time domain collision between a measurement gap with low priority and a measurement gap with high priority, the measurement gap with low priority will be dropped regardless of whether the overlapping measurement gap with high priority has been dropped; taking Fig. 1 as an example, when this rule is used to handle the measurement collision, gap patterns 2, 3, and 4 will all be dropped by the UE, while gap pattern 1 will be kept.
(2) For the time domain collision between the measurement gap with low priority and the measurement gap with high priority, in a case that the measurement gap with high priority is kept, the measurement gap with low priority is dropped; that is, when there is the time domain collision between the measurement gap with low priority and the measurement gap with high priority, in a case that the measurement gap with high priority is not dropped, the measurement gap that has a time domain collision with the measurement gap with high priority will be dropped; taking Fig. 1 as an example, when this rule is used to handle the measurement collision, gap patterns 2 and 4 will both be dropped by the UE, while gap patterns 1 and 3 will be kept.
(3) When multiple MUSIM gaps overlap, the colliding measurement gaps are kept.
   Here, it should be noted that the MUSIM gaps are configured by the network under the request of the UE. Since the MUSIM gaps are requested by the UE, it can be assumed that the UE can handle the collision situation. Therefore, when multiple MUSIM gaps overlap, the UE keep all colliding MUSIM gaps, that is, there is no need to drop any of the MUSIM gaps.
(4) For a collision between multiple MUSIM gaps, the MUSIM gaps used for the same frequency layer are kept.
   Here, it should be noted that the frequency layer in this rule can also be described as a measurement object (MO). That is, if there are multiple colliding MUSIM gaps, some of which are used for different purposes but the target is the same frequency layer (for example, one MUSIM gap is used for measurement of a frequency layer F1, another MUSIM gap is used for obtaining system information at the frequency layer F1, and another MUSIM gap is used for receiving paging at the frequency layer F1), then these MUSIM gaps can be kept.
(5) In case of collision among multiple measurement gaps, an aperiodic measurement gap is kept.
   The measurement gap includes at least one of the following: concurrent measurement gap, pre-configured measurement gap (Pre-MG), network-controlled small measurement gap (NCSG), MUSIM gap, positioning measurement gap, NTN measurement gap, legacy measurement gap. Legacy measurement gap includes: a gap configured through GapConfig (the gap can also be described as a measurement gap), and/or a gap configured through GapConfig-r17 (or GapConfig-r18) (the gap can also be described as a measurement gap). Further, configuring through GapConfig-r17 includes configuring through GapConfig-r17 without preConfigInd or configuring through GapConfig-r17 without ncsgInd; configuring through GapConfig-r18 includes configuring through GapConfig-r18 without preConfigInd or configuring through GapConfig-r18 without ncsgInd; wherein GapConfig, GapConfig-r17, GapConfig-r18, ncsgInd, and preConfigInd are information elements (IEs), which can also be understood as names of signaling. Collision among multiple measurement gaps, an aperiodic measurement gap is kept can be described as an aperiodic MUSIM gap is unconditionally kept in case of collisions with any other gap occasions, including MUSIM gaps and measurement gaps.
(6) When multiple measurement gaps collide, a measurement gap with a longest period is kept. Similarly, the measurement gaps in this rule include the same types of measurement gaps as those included by the measurement gaps in (5).
(7) Collision is resolved in order of decreasing priority, starting with a measurement gap or MUSIM gap with highest priority.
(8) For each collision, measurement gap or MUSIM gap with the highest priority is kept.
(9) For each collision, MUSIM gap with the highest priority is kept and other MUSIM gaps are dropped.

Here, it should be noted that the measurement method according to the embodiment of the present disclosure can also use the first information and the first rule in combination. For example, if the network has configured the first information, the UE can determine whether the overlapping measurement gap is to be kept or dropped based on the first measurement gap; if the network has not configured the first information, the UE can determine whether the overlapping measurement gap is to be kept or dropped based on the first rule.

As an optional implementation, the second information includes at least two priorities configured for a measurement gap. Configuring at least two priorities for the measurement gap can also be described as: the same measurement gap has two or more priorities; wherein the at least two priorities can be configured for the measurement gap through RRC signaling; on this basis, a used or activated priority among the at least two priorities can be indicated.

As an optional implementation, after the UE obtains at least one of the first information, the first rule or the second information, the method further includes:
receiving second indication information, wherein the second indication information may be carried in downlink control information (DCI) or a media access control (MAC) control element (CE).

Specifically, the second indication information carries at least one of the following:
an activated priority; the activated priority can be understood as one or more activated priorities among the multiple configured priorities;
a deactivated priority; the deactivated priority may be understood as one or more deactivated priorities among the multiple configured priorities;
a moment of activation;
a duration in which the activated priority exists;
a number of occurrences of the activated priority;
a duration in which the deactivated priority exists;
a number of occurrences of the deactivated priority.

Here, it should be noted that in this optional implementation, first, the activated priority can be understood as one or more activated priorities among the multiple configured priorities; second, the deactivated priority can be understood as one or more deactivated priorities among the multiple configured priorities; third, a specific example of the moment of activation , the duration in which the activated priority exists, the number of occurrences of the activated priority, the duration in which the deactivated priority exists, the number of occurrences of the deactivated priority, etc. is as follows: the network configures N priorities (N≥2) for a measurement gap. The network indicates, by giving a priority pattern for a certain period of time, the priority specifically used or activated by the UE, and this method can be used in combination with the above-mentioned manner of using DCI or MAC CE. Specifically, as an implementation, after the DCI or MAC CE indicates the activated priority, the priority pattern is further used for indicating the time domain position, duration, etc. in which the priority is activated; alternatively, the priority pattern can also be used independently of the above-mentioned DCI or MAC CE. Specifically, for example, the network sends the second indication information, and the second indication information includes the duration t1 (or the number of occurrences a) in which the priority_i exists, the duration t2 (or the number of occurrences b) in which the priority_j exists, the duration t3 (or the number of occurrences c) in which the priority_k exists, and so on within a time T1 (t1+t2+t3=T1). After receiving the second indication information, the UE can leam that the priority of a specific measurement gap pattern is initiallly priority _i, and after a duration of t1 (or after the number of occurrences a), the priority of the measurement gap pattern is updated to priority_j, and after a duration of t2 (or after the number of occurrences b), the priority of the measurement gap pattern is updated to priority_k.

As a specific example of the optional implementation of the present disclosure, as shown in Fig. 5, the priority configured by the network through RRC for the gap pattern 1 is the 1st priority and the 3rd priority; and the priority configured by the network through RRC for the gap pattern 2 is the 2nd priority. The UE receives DCI at time moment T1 (or slot T1), and the DCI indicates that the priority actually used by the gap pattern 1 or the priority activated for the gap pattern 1 is the 1st priority. Then since the priority of gap pattern 2 is the 2nd priority, which is lower than the priority of gap pattern 1, the gap pattern 2 will be dropped by the UE, that is, the UE can only perform relevant measurement in the gap pattern 1. The UE receives DCI at time moment T2 (or slot T2), and the DCI indicates that the priority actually used by the gap pattern 1 or the priority activated for the gap pattern 1 is the 3rd priority. Then since the priority of gap pattern 2 is the 2nd priority, which is higher than the priority of gap pattern 1, gap pattern 1 will be dropped by the UE, that is, the UE can only perform relevant measurement in the gap pattern 2.

Here, it should be noted that in the related art, the network will only configure one priority for the measurement gap through RRC. For measurement gaps colliding in time domain, a measurement gap with low priority is always dropped by the UE, resulting in that the UE is unable to perform certain measurements. Taking NTN as an example, due to the large difference in transmission delays between different satellite cells, the UE may need multiple measurement gaps with different offsets to complete the measurement of all cells at a certain frequency layer. However, if certain measurement gaps are dropped by the UE due to time domain collisions, the UE cannot measure the cell in which the reference symbol falls in the measurement gap, thereby affecting mobility. Therefore, the embodiment of the present disclosure proposes a more dynamic and flexible method, which can enable the UE to achieve rapid measurement gap updates through rapid priority updates, thereby making full use of a variety of configured measurement gaps to improve system performance.

Further, as an optional implementation, after the UE obtains at least one of the first information, the first rule, or the second information, the method further includes:
receiving third indication information sent by the network, wherein the third indication information is used for indicating a default priority of a measurement gap.

When a measurement gap is configured with multiple priorities, before the network further indicates an activated or used priority, the UE may determine a default priority of the measurement gap based on the received third indication information according to this optional implementation.

In addition, when at least two priorities are configured for the measurement gap, the UE can report fourth indication information to the network, and the fourth indication information is used for indicating whether it is necessary to enable dynamic update of the measurement gap priority. The network can indicate the activated or used priority based on the fourth indication information; of course, the network can also indicate the activated or used priority to the UE directly, instead of based on the fourth indication information reported by the UE.

As an optional implementation, the second information includes a first priority, and the first priority is used for N measurement gaps, where N is a non-zero integer. The first priority used for N measurement gaps can also be described as: the first priority is used for a first measurement gap group, or in other words, a (first) priority is configured for a first measurement gap group; wherein the first measurement gap group includes N measurement gaps, where N is a non-zero integer.

The necessity or benefit of introducing the first priority in this optional implementation lies in: taking MUSIM as an example, the network can configure five measurement gaps. If the network further configures measurement gaps for other services, there will be a possibility that the large number of measurement gaps collide with each other. The method of comparing priorities of measurement gaps will be more complicated. By introducing the first priority, priority comparison can be performed firstly based on the measurement gap group (for example, the same first priority is configured for multiple MUSIM gaps, and the first priority is configured according to the dimension of the measurement gap group; each MUSIM gap can also retain its own priority, which is configured according to the dimension of the measurement gap, and different measurement gaps can have different priorities), and then measurement collisions within the group are resolved.

Further, as an optional implementation, in a case that the second information sent by the network is received, and the second information includes a first priority used for N measurement gaps, the method further includes:
resolving the measurement collision based on the first priority, and then resolving the measurement collision between the N measurement gaps.

In this optional implementation, the resolution of the measurement collision can be described as: the measurement gap to be kept/used among the multiple measurement gaps in which the measurement collision occurs is determined, or can be described as: the measurement gap to be dropped is determined; for example: there is a collision among A measurement gaps; the A measurement gaps include multiple measurement gap groups such as A_i and A_j, and each measurement gap group includes at least one measurement gap. The network configures the measurement gap group A_i with a priority of p, and configures the measurement gap group A_j with a priority of q. The priority p is higher than q. Then the UE will drop the A_j measurement gap group. If there is still a measurement collision among the multiple measurement gaps in the kept A_i measurement gap group, then resolution of the measurement collision among the multiple measurement gaps in the A_i measurement gap group is performed according to the priorities of the measurement gaps.

As an optional implementation, the measurement collision includes MUSIM gap collision (that is, collision(s) between different MUSIM gaps). The measurement collision includes collision(s) between MUSIM gaps and measurement gaps. Collisions between MUSIM gaps and measurement gaps includes collisions between MUSIM gaps and measurement gaps configured via GapConfig-r17 without preConfigInd-r17 or ncsgInd-r17. Collisions between MUSIM gaps and measurement gaps includes collisions between MUSIM gaps and measurement gaps gap(s) configured via GapConfig.

As an optional implementation, the MUSIM gap collision includes at least one of the following:
there is a time domain overlap between MUSIM gaps;
a distance between MUSIM gaps is less than or equal to a first threshold.

As shown in Fig. 6, an embodiment of the present disclosure further provides a measurement method, which is applied to a network. The method includes a step 601, and the step 601 includes at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

In an embodiment of the present disclosure, the network sends at least one of the first information, the first rule or the second information to the UE, so that when a time domain collision occurs, the UE processes, based on the received information, the measurement gaps in which the time domain collision occurs, thereby providing a solution to the measurement collision caused by the coexistence of a variety of measurement gaps in the scenario where the variety of measurement gaps are used jointly.

As an optional implementation, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Here, it should be noted that, the various parameters used in this optional implementation indicate the same contents as those parameters with the same names in the embodiment on the UE side, respectively, and will not be described again herein.

As an optional implementation, the first measurement gap is related to priority and/or measurement collision resolution.

It should be noted here that, in this optional implementation, the first measurement gap being related to the priority means that the priority is obtained implicitly, that is, implicitly indicating that the first measurement gap has the highest priority, so as to retain the first measurement gap based on the priority and drop other colliding measurement gaps; what the measurement collision encompasses is as described in the UE side embodiment and will not be described repetitively here.

As an optional implementation, the first information includes first indication information, and the first indication information indicates a measurement gap to be dropped or kept; wherein the measurement gap may be a first measurement gap (reference measurement gap) or other measurement gaps.

As an optional implementation, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among MUSIM gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

As an optional implementation, the second information includes at least two priorities configured for a measurement gap. Configuring at least two priorities for the measurement gap can also be described as: the same measurement gap has two or more priorities; wherein at least two priorities can be configured for the measurement gap through RRC signaling; on this basis, a used or activated priority among the at least two priorities can be indicated.

As an optional implementation, after the network sends at least one of the first information, the first rule, or the second information to the UE, the method further includes:
sending second indication information to the UE, wherein the second indication information may be carried in a DCI or an MAC CE;
the second indication information carries at least one of the following:
   an activated priority;
   a deactivated priority;
   a moment of activation;
   a duration in which the activated priority exists;
   a number of occurrences of the activated priority;
   a duration in which the deactivated priority exists;
   a number of occurrences of the deactivated priority.

In this optional implementation, the parameters carried by the second indication information are the same as the parameters carried by the second indication information set forth in the UE side embodiment, and will not be described repetitively here.

As an optional implementation, the method further includes:
sending third indication information to the UE, wherein the third indication information is used for indicating a default priority of the measurement gap.

When a measurement gap is configured with multiple priorities, before the network further indicates the activated or used priority, the UE can determine the default priority of the measurement gap based on the third indication information sent by the network according to this optional implementation.

As an optional implementation, the second information includes a first priority, and the first priority is used for N measurement gaps, where N is a non-zero integer; wherein the first priority being used for N measurement gaps can also be described as: the first priority is used for a first measurement gap group, or, described as: a (first) priority is configured for the first measurement gap group; wherein the first measurement gap group includes N measurement gaps, where N is a non-zero integer.

As an optional implementation, the measurement collision includes an MUSIM gap collision.

As an optional implementation, the MUSIM gap collision includes at least one of the following:
MUSIM gaps (or described as MUSIM gap occasions) are overlapping in time domain;
The distance between two MUSIM gaps is less than or equal to a first threshold.

As shown in Fig. 7, an embodiment of the present disclosure further provides a measurement apparatus, which is applied to a UE. The apparatus includes an obtaining module 701, and the obtaining module 701 is configured to perform at least one of the following:
receiving first information sent by a network, wherein the first information is related to a measurement and/or a measurement gap;
obtaining a first rule, wherein the first rule is related to the measurement and/or a measurement collision;
receiving second information sent by the network, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to priority and/or measurement collision resolution.

Optionally, the apparatus further includes:
a first processing module, wherein the first processing module is configured to perform at least one of the following:
keeping the first measurement gap;
dropping a measurement gap having a measurement collision with the first measurement gap.

Optionally, the first information includes first indication information, and the first indication information indicates a measurement gap to be dropped or kept.

Optionally, the first rule is predefined by a protocol, or is indicated by a network, or depends on UE implementation.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among multi-universal subscriber identity module (MUSIM) gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Further, the apparatus also includes:
a first receiving module, configured to receive second indication information, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Further, the apparatus also includes:
a second receiving module, configured to receive third indication information sent by the network, wherein the third indication information is used for indicating a default priority of the measurement gap.

Optionally, the second information includes a first priority, wherein the first priority is used for N measurement gaps, and N is a non-zero integer.

Optionally, the apparatus further includes:
a second processing module, configured to resolve the measurement collision based on the first priority firstly, and then resolve the measurement collision among N measurement gaps.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

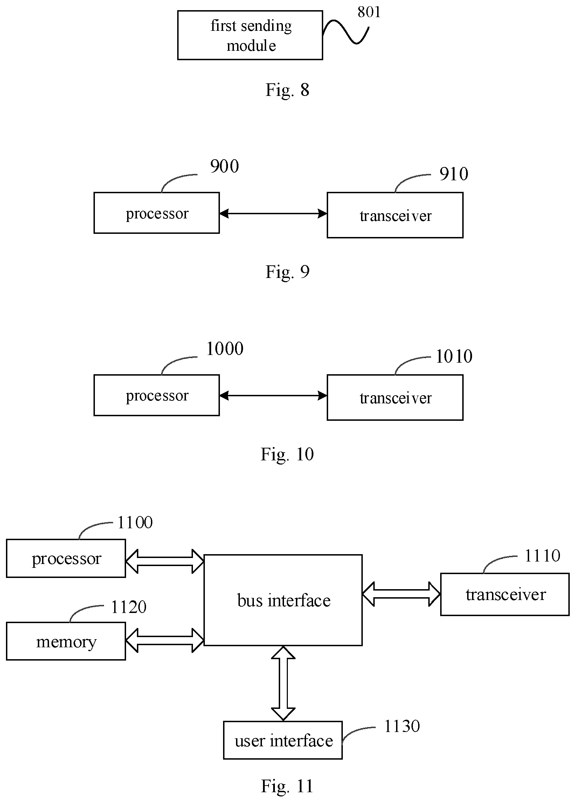

As shown in Fig. 8, an embodiment of the present disclosure further provides a measurement apparatus, which is applied to a network, and includes a first sending module 801, and the first sending module 801 is configured to perform at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to priority and/or measurement collision resolution.

Optionally, the first information includes first indication information, and the first indication information indicates a measurement gap to be dropped or kept.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among MUSIM gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Optionally, the apparatus further includes:
a second sending module, configured to send second indication information to the UE, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Optionally, the apparatus further includes:
a third sending module, configured to send third indication information to the UE, wherein the third indication information is used for indicating a default priority of the measurement gap.

Optionally, the second information includes a first priority, wherein the first priority is used for N measurement gaps, where N is a non-zero integer.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

As shown in Fig. 9, an embodiment of the present disclosure further provides a UE, including a processor 900 and a transceiver 910; the transceiver 910 receives and sends data under the control of the processor 900;
the transceiver 910 is configured to perform at least one of the following:
receiving first information sent by a network, wherein the first information is related to a measurement and/or a measurement gap;
obtaining a first rule, wherein the first rule is related to the measurement and/or a measurement collision;
receiving second information sent by the network, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to priority and/or measurement collision resolution.

Optionally, the processor 900 is further configured to perform at least one of the following:
keeping the first measurement gap;
dropping a measurement gap having a measurement collision with the first measurement gap.

Optionally, the first information includes first indication information, and the first indication information indicates a measurement gap to be dropped or kept.

Optionally, the first rule is predefined by a protocol, or is indicated by a network, or depends on UE implementation.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among multi-universal subscriber identity module (MUSIM) gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Further, the transceiver 910 is further used for receiving second indication information, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Furthermore, the transceiver 910 is further used for receiving third indication information sent by the network, wherein the third indication information is used for indicating a default priority of the measurement gap.

Optionally, the second information includes a first priority, wherein the first priority is used for N measurement gaps, where N is a non-zero integer.

Optionally, the processor 900 is further used for first resolving measurement collisions based on a first priority, and then resolving measurement collisions between N measurement gaps.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

As shown in Fig. 10, an embodiment of the present disclosure further provides a network device, including a processor 1000 and a transceiver 1010; the transceiver 1010 receives and sends data under the control of the processor 1000, and the transceiver 1010 is used for performing at least one of the following:
sending first information to a UE, wherein the first information is related to a measurement and/or a measurement gap;
sending a first rule to the UE, wherein the first rule is related to the measurement and/or a measurement collision;
sending second information to the UE, wherein the second information is related to the measurement and/or a priority of the measurement.

Optionally, the first information includes first measurement gap related information, and the first measurement gap related information includes at least one of the following:
an identifier of a first measurement gap;
a priority of the first measurement gap;
a period of the first measurement gap;
a length of the first measurement gap;
an offset value of the first measurement gap.

Optionally, the first measurement gap is related to priority and/or measurement collision resolution.

Optionally, the first information includes first indication information, and the first indication information indicates a measurement gap to be dropped or kept.

Optionally, the first rule includes at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among MUSIM gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

Optionally, the second information includes at least two priorities configured for a measurement gap.

Optionally, the transceiver 1010 is further used for sending second indication information to the UE, wherein the second indication information carries at least one of the following:
an activated priority;
a deactivated priority;
a moment of activation;
a duration in which the activated priority exists;
a number of occurrences of the activated priority;
a duration in which the deactivated priority exists;
a number of occurrences of the deactivated priority.

Optionally, the transceiver 1010 is further used for sending third indication information to the UE, wherein the third indication information is used for indicating a default priority of the measurement gap.

Optionally, the second information includes a first priority, wherein the first priority is used for N measurement gaps, where N is a non-zero integer.

Optionally, the measurement collision includes an MUSIM gap collision.

Optionally, the MUSIM gap collision includes at least one of the following:
there is a time domain overlap between MUSIM gaps;
a distance between MUSIM gaps is less than or equal to a first threshold.

As shown in Fig. 11, an embodiment of the present disclosure also provides a UE, including a transceiver 1110, a processor 1100, a memory 1120, and a program or instruction stored in the memory 1120 and executable by the processor 1100; when the processor 1100 executes the program or instruction, the above-mentioned measurement method applied to the UE is implemented.

The transceiver 1110 is used for receiving and sending data under the control of the processor 1100.

In Fig. 11, the bus architecture may include any number of interconnected buses and bridges, and links various circuits such as one or more processors represented specifically by processor 1100 and memory represented by memory 1120. The bus architecture can also link various other circuits such as peripherals, voltage regulators, and power management circuits together, which are all well known in the art and are therefore not further described herein. The bus interface provides an interface. The transceiver 1110 can be a plurality of components, namely, a transmitter and a receiver, providing a unit for communicating with various other devices on a transmission medium. For different UEs, the user interface 1130 can also be an interface that can connect externally or internally required devices, and the connected devices include but are not limited to a keypad, a display, a speaker, a microphone, a joystick, etc.

The processor 1100 is responsible for managing the bus architecture and general processing, and the memory 1120 can store data used by the processor 1100 when performing operations.

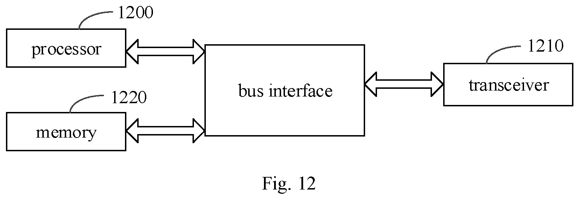

As shown in Fig. 12, an embodiment of the present disclosure also provides a network device, including a transceiver 1210, a processor 1200, a memory 1220, and a program or instruction stored in the memory 1220 and executable by the processor 1200; when the processor 1200 executes the program or instruction, the above-mentioned measurement method applied to the network is implemented.

The transceiver 1210 is used for receiving and sending data under the control of the processor 1200.

In Fig. 12, the bus architecture may include any number of interconnected buses and bridges, and links various circuits such as one or more processors represented specifically by the processor 1100 and the memory represented by the memory 1220. The bus architecture may also link together various other circuits such as peripherals, voltage regulators, and power management circuits, which are well known in the art and are therefore not further described herein. The bus interface provides an interface. The transceiver 1210 may be a plurality of components, namely, a transmitter and a receiver, providing a unit for communicating with various other devices on a transmission medium. The processor 1200 is responsible for managing the bus architecture and general processing, and the memory 1220 may store data used by the processor 1200 when performing operations.

An embodiment of the present disclosure also provides a readable storage medium, on which a program or instruction is stored, and when the program or instruction is executed by a processor, the measurement method applied to the UE as described above is implemented, or the measurement method applied to the network as described above is implemented, and the same technical effect can be achieved. To avoid repetition, it is not repeated here. The readable storage medium includes a computer-readable storage medium, such as a computer read-only memory (ROM), a random access memory (RAM), a magnetic disk or an optical disc, etc.

It should be further explained that the electronic devices described in this specification include but are not limited to smart phones, tablet computers, etc., and many of the functional components described are referred to as modules in order to more particularly emphasize the independence of their implementation manners.

In the disclosed embodiment, the module can be implemented with software so that it can be executed by various types of processors. For example, an identified executable code module can include one or more physical or logical blocks of computer instructions, for example, it can be constructed as an object, process or function. Nevertheless, executable codes of the identified module do not need to be physically located together, but can include different instructions stored in different locations, which, when logically combined together, constitute the module and realize the specified purpose of the module.

In fact, executable code module can be a single instruction or many instructions, and can even be distributed on a plurality of different code segments, distributed among different programs, or distributed across a plurality of memory devices. Similarly, operation data can be identified in the module, and can be implemented and organized in any appropriate type of data structure according to any appropriate form. The operation data can be collected as a single data set, or can be distributed in different locations (including on different storage devices), and can at least partially be present only as an electronic signal in a system or network.

When a module can be implemented by software, considering the state of art, a person skilled in the art can build a corresponding hardware circuit to implement the corresponding function of the module that can be implemented by software without considering the cost. The hardware circuit includes a conventional very large scale integrated circuit (VLSI) or gate array and existing semiconductors such as logic chips, transistors, or other discrete components. The module can also be implemented by a programmable hardware device, such as a field programmable gate array, a programmable array logic, a programmable logic device.

The above exemplary embodiments are described with reference to the accompanying drawings, and many different forms and embodiments are feasible without departing from the spirit and teachings of the present disclosure. Therefore, the present disclosure should not constitute as a limitation on the exemplary embodiments proposed herein. More specifically, these exemplary embodiments are provided so that the present disclosure will be feasible and complete, and the scope of the present disclosure will be conveyed to those skilled in the art. In these figures, the component sizes and relative sizes may be exaggerated for clarity. The terms used here are only based on the purpose of describing specific exemplary embodiments and are not intended to be limiting. As used herein, unless the text clearly indicates otherwise, the singular forms "one", "an" and "the" are intended to include the plural form. It will be further understood that the terms "including" and/or "comprising" when used in this specification indicate the presence of the features, integers, steps, operations, components and/or members, but do not exclude the presence or addition of one or more other features, integers, steps, operations, components, members and/or their groups. Unless otherwise indicated, when stated, a range of values includes the upper and lower limits of that range and any subranges therebetween.

The above describes optional embodiments of the present disclosure. It should be pointed out that for ordinary technicians in this technical field, several improvements and modifications can be made without departing from the principles described in the present disclosure. These improvements and modifications should also be regarded as falling within the scope of the present disclosure.

## Claims

1. A measurement method, applied to a user equipment (UE), and comprising at least one of the following:
receiving first information sent by a network, wherein the first information is related to a measurement and/or a measurement gap;
obtaining a first rule, wherein the first rule is related to the measurement and/or a measurement collision; or
receiving second information sent by the network, wherein the second information is related to the measurement and/or a priority of the measurement.

2. The measurement method according to claim 1, wherein the first information comprises first measurement gap related information, and the first measurement gap related information comprises at least one of the following:
an identifier of a first measurement gap;
a priority of the first measurement gap;
a period of the first measurement gap;
a length of the first measurement gap; or
an offset value of the first measurement gap.

3. The measurement method according to claim 2, wherein the first measurement gap is related to the priority and/or resolution of the measurement collision.

4. The measurement method according to claim 2 or 3, further comprising at least one of the following:
keeping the first measurement gap; or
dropping a measurement gap having a measurement collision with the first measurement gap.

5. The measurement method according to claim 1, wherein the first information comprises first indication information, and the first indication information indicates a measurement gap to be dropped or kept.

6. The measurement method according to claim 1, wherein the first rule is predefined by a protocol, or is indicated by a network, or depends on a UE implementation.

7. The measurement method according to claim 1, wherein the first rule comprises at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among multi-universal subscriber identity module (MUSIM) gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

8. The measurement method according to claim 1, wherein the second information comprises at least two priorities configured for a measurement gap.

9. The measurement method according to claim 1 or 8, further comprising:
receiving second indication information, wherein the second indication information carries at least one of the following:
an activated priority;
a deactivated priority;
a moment of activation;
a duration in which the activated priority exists;
a number of occurrences of the activated priority;
a duration in which the deactivated priority exists; or
a number of occurrences of the deactivated priority.

10. The measurement method according to claim 1, further comprising:
receiving third indication information sent by the network, wherein the third indication information is used for indicating a default priority of the measurement gap.

11. The measurement method according to claim 1, wherein the second information comprises a first priority, and the first priority is used for N measurement gaps, where N is a non-zero integer.

12. The measurement method according to claim 11, further comprising:
resolving the measurement collision based on the first priority, and then resolving the measurement collision between the N measurement gaps.

13. The measurement method according to claim 1, wherein the measurement collision comprises an MUSIM gap collision.

14. The measurement method according to claim 13, wherein the MUSIM gap collision comprises at least one of the following:
there is a time domain overlap between MUSIM gaps; or
a distance between MUSIM gaps is less than or equal to a first threshold.

15. A measurement method, applied to a network, comprising at least one of the following:
sending first information to a UE, wherein the first information is related to a measurement and/or a measurement gap;
sending a first rule to the UE, wherein the first rule is related to the measurement and/or a measurement collision; or
sending second information to the UE, wherein the second information is related to the measurement and/or a priority of the measurement.

16. The measurement method according to claim 15, wherein the first information comprises first measurement gap related information, and the first measurement gap related information comprises at least one of the following:
an identifier of a first measurement gap;
a priority of the first measurement gap;
a period of the first measurement gap;
a length of the first measurement gap; or
an offset value of the first measurement gap.

17. The measurement method according to claim 16, wherein the first measurement gap is related to the priority and/or resolution of the measurement collision.

18. The measurement method according to claim 15, wherein the first information comprises first indication information, and the first indication information indicates a measurement gap to be dropped or kept.

19. The measurement method according to claim 15, wherein the first rule comprises at least one of the following:
for a time domain collision between a measurement gap with low priority and a measurement gap with high priority, dropping the measurement gap with low priority;
for the time domain collision between the measurement gap with low priority and the measurement gap with high priority, in a case that the measurement gap with high priority is kept, dropping the measurement gap with low priority;
for collision among MUSIM gaps, keeping all colliding MUSIM gaps;
for collision among MUSIM gaps, keeping MUSIM gaps used for a same frequency layer;
for collision among measurement gaps, an aperiodic measurement gap is kept;
for collision among measurement gaps, keeping a measurement gap with a longest period;
resolving collision in order of decreasing priority, starting with the gap that has the highest priority;
for each collision, the MUSIM gap with highest priority is kept; or
for each collision, the MUSIM gap with highest priority is kept and the MUSIM gap with low priority is dropped.

20. The measurement method according to claim 15, wherein the second information comprises at least two priorities configured for a measurement gap.

21. The measurement method according to claim 15 or 20, further comprising:
sending second indication information to the UE, wherein the second indication information carries at least one of the following:
an activated priority;
a deactivated priority;
a moment of activation;
a duration in which the activated priority exists;
a number of occurrences of the activated priority;
a duration in which the deactivated priority exists; or
a number of occurrences of the deactivated priority.

22. The measurement method according to claim 15, further comprising:
sending third indication information to the UE, wherein the third indication information is used for indicating a default priority of the measurement gap.

23. The measurement method according to claim 15, wherein the second information comprises a first priority, and the first priority is used for N measurement gaps, where N is a non-zero integer.

24. The measurement method according to claim 15, wherein the measurement collision comprises MUSIM gap collision.

25. The measurement method according to claim 24, wherein the MUSIM gap collision comprises at least one of the following:
MUSIM gaps are overlapping in time domain; or
a distance between MUSIM gaps is less than or equal to a first threshold.

26. A measurement apparatus, applied to a UE, and comprising an obtaining module, wherein the obtaining module is configured to perform at least one of the following:
receiving first information sent by a network, wherein the first information is related to a measurement and/or a measurement gap;
obtaining a first rule, wherein the first rule is related to the measurement and/or a measurement collision; or
receiving second information sent by the network, wherein the second information is related to the measurement and/or a priority of the measurement.

27. A measurement apparatus, applied to a network, and comprising a first sending module, wherein the first sending module is configured to perform at least one of the following:
sending first information to a UE, wherein the first information is related to a measurement and/or a measurement gap;
sending a first rule to the UE, wherein the first rule is related to the measurement and/or a measurement collision; or
sending second information to the UE, wherein the second information is related to the measurement and/or a priority of the measurement.

28. A UE, comprising a processor and a transceiver, wherein the transceiver receives and sends data under the control of the processor,
the transceiver is used for receiving first information sent by a network, wherein the first information is related to a measurement and/or a measurement gap;
the processor is used for obtaining a first rule, wherein the first rule is related to the measurement and/or a measurement collision;
the transceiver is further used for receiving second information sent by the network, wherein the second information is related to the measurement and/or a priority of the measurement.

29. A network device, comprising a processor and a transceiver, wherein the transceiver receives and sends data under the control of the processor, the transceiver is used for performing at least one of the following:
sending first information to a UE, wherein the first information is related to a measurement and/or a measurement gap;
sending a first rule to the UE, wherein the first rule is related to the measurement and/or a measurement collision; or
sending second information to the UE, wherein the second information is related to the measurement and/or a priority of the measurement.

30. A UE, comprising a transceiver, a processor, a memory, and a program stored in the memory and executable by the processor, wherein the processor, when executing the program, implements the measurement method according to any one of claims 1 to 14.

31. A network device, comprising a transceiver, a processor, a memory, and a program stored in the memory and executable by the processor, wherein the processor, when executing the program, implements the measurement method according to any one of claims 15 to 25.

32. A computer-readable storage medium having a computer program stored thereon, wherein the computer program, when executed by a processor, implements the measurement method according to any one of claims 1 to 14, or the measurement method according to any one of claims 15 to 25.
